# EUROPÄISCHE PATENTSCHRIFT

(11) **EP 1 433 061 B1**
(45) Veröffentlichungstag und Bekanntmachung des Hinweises auf die Patenterteilung: **15.03.2006**
(21) Anmeldenummer: 02762230.7
(22) Anmeldetag: 30.07.2002
(51) Int. Cl.: G06F 11/22

(54) **VERFAHREN ZUM ÜBERPRÜFEN EINES RECHNERKERNS EINES MIKROPROZESSORS ODER EINES MIKROCONTROLLERS**
METHOD FOR VERIFYING THE CALCULATOR CORE OF A MICROPROCESSOR OR A MICROCONTROLLER
PROCEDE D'ESSAI DU CALCULATEUR CENTRAL D'UN MICROPROCESSEUR OU D'UN MICROCONTROLEUR

(30) Priorität: 28.09.2001 DE 10148032
(43) Veröffentlichungstag der Anmeldung: 30.06.2004
(73) Patentinhaber: ROBERT BOSCH GMBH, 70442 Stuttgart (DE)
(72) Erfinder: MATTERN, Klaus-Peter, 71717 Beilstein (DE); HERING, Michael, 71229 Leonberg (DE); HARTER, Werner, 75428 Illingen (DE)
(86) Internationale Anmeldenummer: PCT/DE2002/002790
(87) Internationale Veröffentlichungsnummer: WO 2003/032162

(56) Entgegenhaltungen:
- DE-A- 3 737 713
- DE-A- 19 500 188
- US-A- 5 195 095

## Beschreibung

Die vorliegende Erfindung betrifft ein Verfahren zum Erstellen eines Selbsttests zum Überprüfen eines Rechnerkerns eines Mikroprozessors oder eines Mikrocontrollers auf ordnungsgemäße Funktion. Der Rechnerkern umfasst mehrere Gatter mit jeweils mehreren Transistoren. Bei dem Verfahren wird während eines bestimmungsgemäßen Ablaufs eines Computerprogramms auf dem Mikroprozessor oder Mikrocontroller ein Selbsttest zyklisch durchlaufen. Im Rahmen des Selbsttest werden Gatter des Rechnerkerns auf ordnungsgemäße Funktion überprüft.

Die Erfindung betrifft außerdem einen Selbsttest zum Überprüfen eines Rechnerkerns eines Mikroprozessors oder Mikrocontrollers auf ordnungsgemäße Funktion. Der Rechnerkern umfasst mehrere Gatter mit jeweils mehreren Transistoren. Der Selbsttest kann während eines bestimmungsgemäßen Ablaufs eines Computerprogramms auf dem Mikroprozessor oder Mikrocontroller in zyklischen Durchläufen ausgeführt werden. Dabei überprüft der Selbsttest Gatter des Rechnerkerns auf ordnungsgemäße Funktion.

Schließlich betrifft die vorliegende Erfindung einen Mikroprozessor oder einen Mikrocontroller mit einem Rechnerkern mit mehreren Gattern mit jeweils mehreren Transistoren. Auf dem Rechnerkern ist ein Selbsttest zum Überprüfen des Rechnerkerns auf ordnungsgemäße Funktion ausführbar. Der Selbsttest kann während eines bestimmungsgemäßen Ablaufs eines Computerprogramms auf dem Mikroprozessor oder Mikrocontroller in zyklischen Durchläufen ausgeführt werden. Dabei überprüft der Selbsttest Gatter des Rechnerkerns auf ordnungsgemäße Funktion.

### Stand der Technik

Der Selbsttest eines Rechnerkerns wird auch als Built-In-Self-Test (BIST) bezeichnet. Verschiedene Selbsttestverfahren sind bspw. aus der DE 43 05 288 A1 und dem Artikel "The Fail-Stop Controller AE11" von Böhl, E. et al., International Test Conference, Paper 24.1, Seiten 567 bis 577, 0-7803-4209-7/97, 1997 IEEE bekannt. Auf diese Druckschriften wird ausdrücklich Bezug genommen.

Unter "bestimmungsgemäßem Ablauf eines. Computerprogramms auf dem Mikroprozessor oder Mikrocontroller" ist gemeint, dass bspw. auf einem Mikroprozessor oder Mikrocontroller eines Steuergeräts ein Steuerprogramm abläuft, durch das der Mikroprozessor bzw. das Steuergerät überhaupt erst in die Lage versetzt wird, seine Steuerfunktion erfüllen zu können. Der Rechnerkern eines Mikroprozessors oder Mikrocontrollers wird auch als Central Processing Unit (CPU) oder Core bezeichnet.

Aus dem Bereich der Kraftfahrzeugsteuergeräte ist es zur Überprüfung der Funktion eines Rechnerkerns des Steuergeräts während des bestimmungsgemäßen Betriebs des Steuergeräts bekannt, zwei Rechner mit der gleichen Rechenleistungen vorzusehen. Dies wird auch als redundantes Rechnerkonzept bezeichnet. Auf beiden Rechnern läuft der Steuer- bzw. Regelalgorithmus ab. Die Ergebnisse des Steuer- bzw. Regelalgorithmus der beiden Rechner werden ständig miteinander verglichen. Bei signifikanten Abweichungen der Ergebnisse voneinander, wird von einem Fehler in einem der beiden Rechner ausgegangen und das gesamte System abgeschaltet, um eine fehlerhafte Steuerung bzw. Regelung zu vermeiden.

Nachteilig bei diesem aus dem Stand der Technik bekannten Verfahren zum Überprüfen der ordnungsgemäßen Funktion des Rechnerkerns eines Mikroprozessors oder Mikrocontrollers eines Steuergeräts ist jedoch, dass Fehler, die erst bei einem bestimmungsgemäßen Betrieb des Steuergeräts, d. h. bei der Abarbeitung eines Steuer- bzw. Regelprogramms, auftreten, zu einem Abschalten des Steuergeräts zu einem Zeitpunkt führen, zu dem die Steuer- bzw. Regelfunktion besonders wichtig wäre. Bei einer Stabilitätsregelung für ein Kraftfahrzeug bspw. wird die Regelung dann aktiv, wenn das Fahrzeug droht auszubrechen. Wenn in einer solchen Situation ein Fehler des Rechnerkerns des Steuergeräts detektiert wird und das Steuergerät abgeschaltet und damit die Regelung inaktiviert wird, kann dies zu gefährlichen Situationen bis hin zum Ausbrechen des Fahrzeugs führen.

Um diesen Nachteilen entgegenzutreten, ist ein bspw. aus der DE 195 00 188 A1 bekanntes, sog. diversitäres Rechnerkonzept entwickelt worden, bei dem der erste Rechner, der sog. Algorithmusrechner, leistungsstärker als der zweite Rechner, der sog. Monitorrechner, ist. Auf dem Algorithmusrechner läuft der eigentliche Steuer- bzw. Regelalgorithmus und zusätzlich eine Kontrollrechnung ab. Die Kontrollrechnung wird auf dem gleichen Mikroprozessor oder Mikrocontroller ausgeführt wie der Steuer- bzw. Regelalgorithmus, jedoch in unterschiedlichen Zeitscheiben. Bei jedem Aufruf der Kontrollrechnung wird ein bestimmter Bereich, d. h. werden bestimmte Gatter, des Rechnerkerns auf eine ordnungsgemäße Funktion überprüft. Mit der Kontrollrechnung können Fehler des Rechnerkerns des Algorithmusrechners auch dann erkannt werden, wenn dieser nicht bestimmungsgemäß betrieben wird, d. h. wenn kein Steuer- bzw. Regelprogramm abgearbeitet wird. Die Kontrollrechnung kann als eine Art Selbsttest bezeichnet werden.

Auf dem Monitorrechner läuft dieselbe Kontrollrechnung ab. Die Ergebnisse der Kontrollrechnungen werden miteinander verglichen und bei signifikanten Abweichungen der Ergebnisse voneinander, wird von einem Fehler in dem Rechnerkern des Algorithmusrechners ausgegangen und dieser abgeschaltet, um eine fehlerhafte Steuerung bzw. Regelung zu vermeiden. Mit Hilfe der Kontrollrechnung kann eine Testabdeckung von 80% bis 85% aller Gatter des Rechnerkerns des Algorithmusrechners erzielt werden.

Die verbleibenden 15% bis 20% der Gatter des Rechnerkerns des Algorithmusrechners müssen nach wie vor anhand einer Modellierung des Steuer- bzw. Regelalgorithmus auf dem Monitorrechner und eines Vergleichs des modellierten Ergebnisses mit dem tatsächlichen Ergebnis des Algorithmusrechners auf ordnungsgemäße Funktion überprüft werden. Für diese 15% bis 20% der Gatter des Rechnerkerns besteht somit nach wie vor das oben geschilderte Problem, dass Fehler u. U. erst bei einem bestimmungsgemäßen Betrieb des Algorithmus, d. h. bspw. bei der Abarbeitung eines Steuer- bzw. Regelprogramms, auftreten und erkannt werden können. Außerdem führt die Modellierung des Steuer- bzw. Regelalgorithmus in dem Monitorrechner dazu, dass bei einer Änderung des eigentlichen Steuer- bzw. Regelalgorithmus auch das Modell geändert werden muss. Es sind also ständig zwei Gruppen von Entwicklern damit beschäftigt, um zum einen den eigentlichen Steuer- bzw. Regelalgorithmus und zum anderen das Modell weiterzuentwickeln. Dies bedeutet einen erheblichen Personal- und Kostenaufwand.

Die vorliegende Erfindung ist in Anspruch 1 definiert.

Der vorliegenden Erfindung liegt die Aufgabe zu Grunde, einen Rechnerkern eines Mikroprozessors oder Mikrocontrollers derart auf eine ordnungsgemäße Funktion zu prüfen, dass die o. g. Nachteile vermieden werden. Insbesondere soll die Funktionsprüfung auch solche Fehler frühzeitig detektieren können, die erst bei einem bestimmungsgemäßen Betrieb des Mikroprozessors oder Mikrocontrollers auftreten, und möglichst auf den Einsatz von Modellen für die Steuer- bzw. Regelalgorithmen verzichten.

Zur Lösung dieser Aufgabe wird ausgehend von dem Verfahren der eingangs genannten Art vorgeschlagen, dass zumindest diejenigen Gatter des Rechnerkerns, deren Zustand Auswirkungen auf den bestimmungsgemäßen Ablauf des Computerprogramms auf dem Mikroprozessor oder Mikrocontroller hat, während eines Durchlaufs des Selbsttests überprüft werden und wobei der Selbsttest erstellt wird, indem.
- ein Entwurf des Selbsttests für den Rechnerkern erstellt wird;
- überprüft wird, ob der Zustand derjenigen Gatter des Rechnerkerns, die von dem Entwurf des Selbsttest während eines Durchlaufs nicht überprüft werden, Auswirkungen auf den bestimmungsgemäßen Ablauf des Computerprogramms auf dem Mikroprozessor oder Mikrocontroller hat;
- falls der Zustand mindestens eines Gatters des Rechnerkerns, das von dem Entwurf des Selbsttests während eines Durchlaufs nicht überprüft wird, Auswirkungen auf den bestimmungsgemäßen Ablauf des Computerprogramms auf dem Mikroprozessor oder Mikrocontroller hat, der fertige Selbsttest erstellt wird, indem der Entwurf des Selbsttests derart erweitert wird, dass zusätzlich zumindest diejenigen Gatter des Rechnerkerns überprüft werden, die von dem Entwurf des Selbsttests nicht überprüft wurden und deren Zustand Auswirkungen auf den bestimmungsgemäßen Ablauf des Computerprogramms auf dem Mikroprozessor oder Mikrocontroller hat; und
- falls der Zustand derjenigen Gatter des Rechnerkerns, die von dem Entwurf des Selbsttest während eines Durchlaufs nicht überprüft werden, keine Auswirkungen auf den bestimmungsgemäßen Ablauf des Computerprogramms auf dem Mikroprozessor oder Mikrocontroller hat, der Entwurf des Selbsttests als fertiger Selbsttest herangezogen wird.

### Vorteile der Erfindung

Erfindungsgemäß ist erkannt worden, dass es in einem Rechnerkern einige Gatter gibt, deren Zustand sich auf einen bestimmungsgemäßen Ablauf eines Computerprogramms auf dem Mikroprozessor oder Mikrocontroller nicht auswirkt. Fehler dieser Gatter, z. B. stuck at 0 oder stuck at 1, haben somit keinerlei Auswirkungen auf den Ablauf des Computerprogramms und damit auf die ordnungsgemäße Funktion des Mikroprozessors oder Mikrocontrollers. Es wurde weiter erkannt, dass diese Gatter von einem Selbsttest nicht überprüft werden müssen, um eine ordnungsgemäße Funktion des Mikroprozessors sicherstellen zu können.

Wichtig für die vorliegende Erfindung ist es, zunächst .alle Gatter zu ermitteln, die von dem Selbsttest nicht umfasst sind, und nachzuweisen, dass der Zustand dieser Gatter nicht relevant ist, d. h. keine Auswirkung auf den bestimmungsgemäßen Ablauf eines bestimmten Computerprogramms auf dem Mikroprozessor oder Mikrocontroller hat. Erfindungsgemäß wird zwar keine vollständige Testabdeckung aller Gatter des Rechnerkerns erzielt, es werden aber alle relevanten Gatter überprüft. Auf eine Modellierung des Computerprogramms, z. B. von Steuer- bzw. Regelalgorithmen, zur Überprüfung der von dem Selbsttest nicht abgedeckten Gatter kann bei der vorliegenden Erfindung verzichtet werden, da diese Gatter sowieso keine Auswirkung auf den bestimmungsgemäßen Ablauf des Computerprogramms haben.

Gemäß einer vorteilhaften Weiterbildung der vorliegenden Erfindung wird vorgeschlagen, dass vor der Überprüfung, ob der Zustand derjenigen Gatter des Rechnerkerns, die von dem Entwurf des Selbsttests während eines Durchlaufs nicht überprüft werden, Auswirkungen auf den bestimmungsgemäßen Ablauf des Computerprogramms auf dem Mikroprozessor oder Mikrocontroller hat, ermittelt wird, welche Gatter des Rechnerkerns von dem Entwurf des Selbsttests während eines Durchlaufs nicht überprüft werden.

Gemäß einer bevorzugten Ausführungsform der Erfindung wird vorgeschlagen, dass die Ermittlung, welche Gatter des Rechnerkerns von dem Entwurf des Selbsttests während eines Durchlaufs nicht überprüft werden, auf einem Emulator ausgeführt wird, auf dem die Gatterstruktur des Rechnerkerns zumindest teilweise abgebildet ist.

Vorteilhafterweise wird die Überprüfung, ob der Zustand derjenigen Gatter des Rechnerkerns, die von dem Entwurf des Selbsttests während eines Durchlaufs nicht überprüft werden, Auswirkungen auf den bestimmungsgemäßen Ablauf des Computerprogramms auf dem Mikroprozessor oder Mikrocontroller hat, auf einem Emulator ausgeführt, auf dem die Gatterstruktur des Rechnerkerns zumindest teilweise abgebildet ist.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein diversitäres Rechnerkonzept zur Realisierung eines erfindungsgemäßen Verfahrens zum Überprüfen eines Mikroprozessors auf ordnungsgemäße Funktion;
- Figur 2: ein diversitäres Rechnerkonzept zur Realsierung eines aus dem Stand der Technik bekannten Verfahrens zum Überprüfen eines Mikroprozessors auf ordnungsgemäße Funktion;
- Figur 3: ein Ablaufdiagramm des erfindungsgemäßen Verfahrens; und
- Figur 4: einen Mikroprozessor, auf dem ein nach dem erfindungsgemäßen Verfahren erstellter Selbsttest ausgeführt werden kann.

### Beschreibung der Ausführungsbeispiele

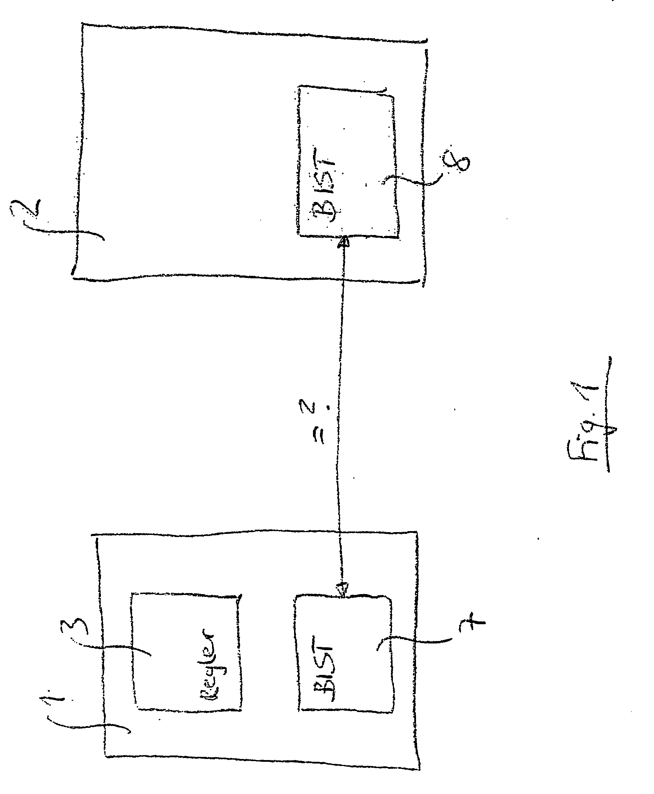

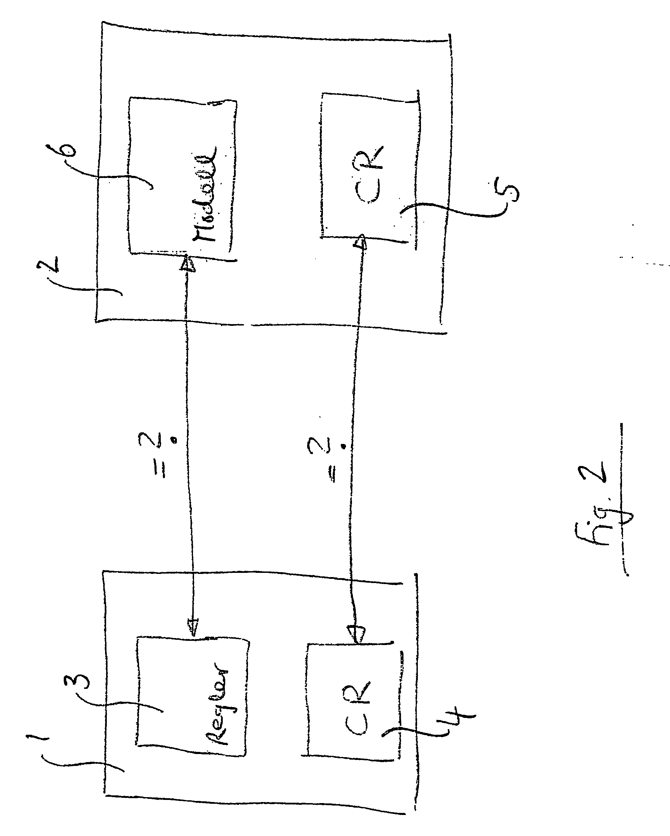

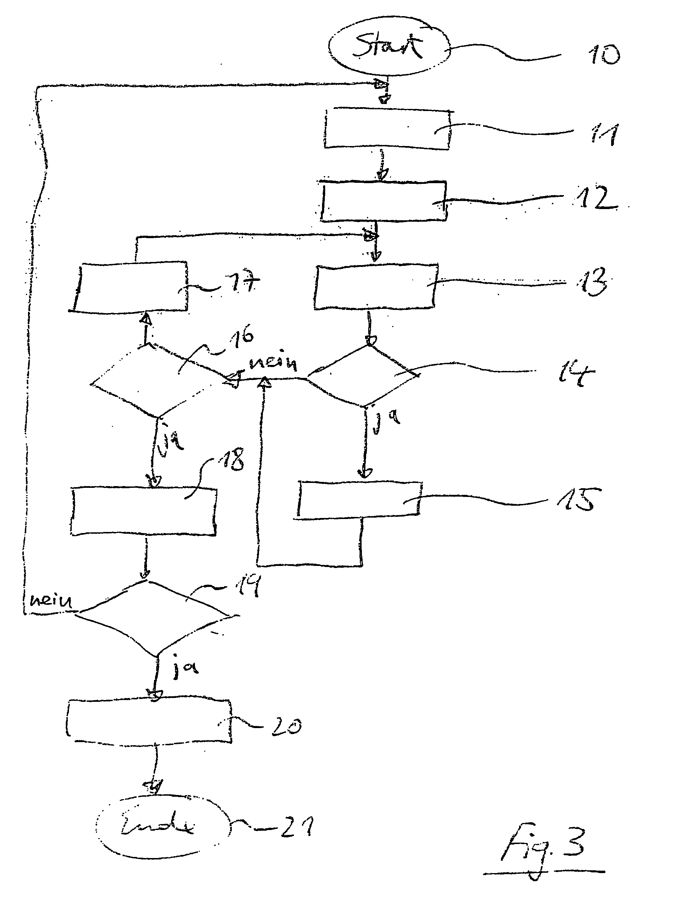

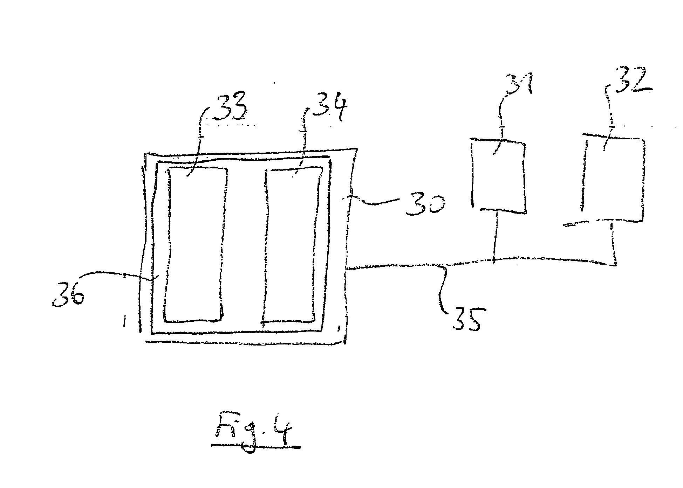

In Figur 4 ist ein erfindungsgemäßer Mikroprozessor in seiner Gesamtheit mit dem Bezugszeichen 30 bezeichnet. Über eine geeignete Datenübertragungsverbindung 35 ist der Mikroprozessor 30 mit einem Hauptspeicher 31 und mit einer Ein-/ Ausgabeeinheit 32 verbunden. Der Hauptspeicher 31 dient zum Speichern von Rechengrößen und von Computerprogrammen. Über die Ein-/ Ausgabeeinheit 32 werden Daten von Peripheriegeräten eingelesen und an sie ausgegeben.

Der Mikroprozessor 30 verfügt über einen Rechnerkern 36, der auch als Central Processing Unit (CPU) oder als Core bezeichnet wird. Der Mikroprozessor 30 umfasst ein Steuerwerk 33 und ein Operationswerk 34. Das Steuerwerk 33 übernimmt die Ablaufsteuerung innerhalb des Prozessors 30 sowie die Ansteuerung des Hauptspeichers 31 und der Ein-/ Ausgabeeinheit 32. Es veranlasst das Lesen von Befehlen des Computerprogramms aus dem Hauptspeicher 31, interpretiert sie und steuert ihre Ausführung. Die zu verarbeitenden Operanden werden aus dem Hauptspeicher 31 gelesen oder über die Ein-/ Ausgabeeinheit 32 in das Operationswerk 34 eingegeben und die Resultate in den Hauptspeicher 31 geschrieben oder über die Ein-/Ausgabeeinheit 32 ausgegeben. Das Operationswerk 34 übernimmt dabei die Zwischenspeicherung der Operanden und der Resultate und führt die logischen und arithmetischen Operationen mit diesen Operanden aus.

Neben dem externen Hauptspeicher 31 besitzt der Mikroprozessor 30 selbst einige Speicherplätze. Einige von ihnen sind für spezielle Abläufe innerhalb des Prozessors 30 vorgesehen und für die Maschinen- bzw. Assemblerprogrammierung nicht unmittelbar verfügbar. Andere können wie Speicherzellen des Hauptspeichers 31 explizit angewählt werden und sind somit für den Programmierer "sichtbar".

Die Schaltung des Rechnerkerns 36 ist hauptsächlich aus einer Vielzahl von Transistoren (nicht dargestellt) aufgebaut. Mehrere Transistoren können zu Gattern zusammengefasst werden. Die Ausgänge der Gatter werden als Knoten bezeichnet. Ein Knoten kann als ein Punkt der Schaltung des Rechnerkerns mit einem eindeutigen Verhalten zu jedem Zeitpunkt beschrieben werden. Ein Rechnerkern umfasst bspw. etwa 100.000 Gatter mit jeweils etwa 10 bis 100 Transistoren.

Ein Mikrocontroller, auf dem das erfindungsgemäße Verfahren ebenfalls ausgeführt werden kann, ist aus dem Artikel "The Fail-Stop Controller AE11" von Böhl, E. et al., International Test Conference, Paper 24.1, Seiten 567 bis 577, 0-7803-4209-7/97, 1997 IEEE bekannt. Auf diese Druckschrift wird ausdrücklich Bezug genommen.

In Figur 2 ist ein diversitäres Rechnerkonzept, wie es bspw. aus der DE 195 00 188 A1 bekannt ist, dargestellt. Auf diese Druckschrift wird ausdrücklich Bezug genommen. Dieses Rechnerkonzept dient zur Ausführung eines aus dem Stand der Technik bekannten Verfahrens zum Überprüfen eines Rechnerkerns 36 eines Mikrocontrollers 30 eines Kraftfahrzeugsteuergeräts auf ordnungsgemäße Funktion.

Bei dem diversitären Rechnerkonzept sind zwei Rechner vorgesehen. Ein erster Rechner, der sog. Algorithmusrechner 1, ist leistungsstärker als der zweite Rechner, der sog. Monitorrechner 2. Auf dem Algorithmusrechner 1 läuft ein Computerprogramm mit dem eigentlichen Steuer- bzw. Regelalgorithmus 3 ab. Außerdem wird auf dem Algorithmusrechner 1 eine Kontrollrechnung (CR) 4 ausgeführt. Bei der Kontrollrechnung 4 werden in beschränktem Umfang Testprogramme von dem Mikroprozessor 30 abgearbeitet und Ausgangssignale über die Ausgabeeinheit 32 abgegriffen und ausgewertet. Die als Teil des Computerprogramms softwaremäßig implementierte Kontrollrechnung 4 wird von dem Algorithmusrechner 1 online in Zeitscheiben parallel zur Ausführung des eigentlichen Steuer- bzw. Regelalgorithmus 3 abgearbeitet. Bei jedem Aufruf der Kontrollrechnung 4 in einer Zeitscheibe wird ein bestimmter Bereich, d. h. werden bestimmte Gatter, des Rechnerkerns 36 auf eine ordnungsgemäße Funktion überprüft. Für einen vollständigen Durchlauf der Kontrollrechnung 4 wird diese in mehreren Zeitscheiben aufgerufen. Nach einem Durchlauf der Kontrollrechnung werden nicht alle Gatter des Rechnerkerns 36 überprüft. Üblicherweise wird bei der Kontrollrechnung eine Testabdeckung von etwa 80% bis 85% aller Gatter des Rechnerkerns 36 des Algorithmusrechners 1 erreicht.

Auf dem Monitorrechner 2 wird ebenfalls eine Kontrollrechnung (CR) 5 ausgeführt. Dabei wird die ordnungsgemäße Funktion von Gattern eines Rechnerkerns 36 des Modellrechners 2 überprüft. Die Ergebnisse der auf dem Algorithmusrechner 1 ausgeführten Kontrollrechnung 4 und der auf dem Modellrechner 2 ausgeführten Kontrollrechnung 5 werden miteinander verglichen. Bei signifikanten Abweichungen der Ergebnisse voneinander, wird von einem Fehler in dem Rechnerkern 36 des Algorithmusrechners 1 ausgegangen und dieser abgeschaltet, um eine fehlerhafte Steuerung bzw. Regelung zu vermeiden.

Mit der Kontrollrechnung können Fehler des Rechnerkerns 36 des Algorithmusrechners 1 auch dann erkannt werden, wenn dieser nicht bestimmungsgemäß betrieben wird, d. h. wenn kein Steuer- bzw. Regelprogramm abgearbeitet wird. Die Kontrollrechnung kann als eine Art Selbsttest bezeichnet werden.

Die verbleibenden 15% bis 20% der Gatter des Rechnerkerns 36 des Algorithmusrechners 1, die von der Kontrollrechnung nicht umfasst sind, müssen anhand einer Modellierung 6 des Computerprogramms, z. B. des Steuer- bzw. Regelalgorithmus 3, auf dem Monitorrechner 2 und eines Vergleichs des modellierten Ergebnisses des Monitorrechners 2 mit dem tatsächlichen Ergebnis des Algorithmusrechners 1 auf ordnungsgemäße Funktion überprüft werden. Auf dem Monitorrechner 3 wird der Steuer- bzw. Regelalgorithmus 3 in einem Modell 6 abgebildet. Die Ergebnisse des eigentlichen Steuer- bzw. Regelalgorithmus 3 und des modellierten Steuer- bzw. Regelalgorithmus 6 werden miteinander verglichen. Bei signifikanten Abweichungen der Ergebnisse voneinander, wird von einem Fehler in dem Rechnerkern 36 des Algorithmusrechners 1 ausgegangen und dieser abgeschaltet. Auf diese Weise können zwar die von der Kontrollrechnung nicht abgedeckten Gatter des Mikroprozessors 30 auf Fehler überprüft werden. Für diese 15% bis 20% der Gatter des Mikroprozessors 30 des Algorithmusrechners 1 besteht allerdings das Problem, dass Fehler u. U. erst bei einem bestimmungsgemäßen Betrieb des Mikroprozessors 30, d. h. bei der Abarbeitung eines Steuer- bzw. Regelprogramms, auftreten und erkannt werden können. Außerdem führt die Modellierung 6 des Steuer- bzw. Regelalgorithmus in dem Monitorrechner 2 dazu, dass bei einer Änderung des Steuer- bzw. Regelalgorithmus 3 auch das Modell 6 geändert werden muss. Erfindungsgemäß wird deshalb das in Figur 1 dargestellte diversitäre Rechnerkonzept vorgeschlagen, bei dem die bekannte Kontrollrechnung zu einem vollständigen Selbsttest 7, 8, einem sog. Built-In-Self-Test (BIST), erweitert worden ist. Als Basis des BIST 7 kann auf von einem Halbleiterhersteller im Zuge der Fertigung des Rechnerkerns 36 verwendete Testvektoren zurückgegriffen werden. Bei dem BIST 7 werden Testprogramme von dem Algorithmusrechner 1 abgearbeitet und die generierten Ergebnisse (Siganturen) als Ausgangssignale an Ausgängen des Mikroprozessors 30 abgegriffen und ausgewertet.

Zum Auswerten der Testergebnisse werden diese über eine serielle Datenschnittstelle dem Monitorrechner 2 zur Verfügung gestellt. Dort werden die Testergebnisse des BIST 7 des Algorithmusrechners 1 und des BIST 8 des Monitorrechners 2 miteinander verglichen. Bei einem detektierten Fehler wird eine Sicherheitsabschaltung des Algorithmusrechners 1 bis zum nächsten Einschalten der Versorgungsspannung (Hardware-Reset) ausgeführt. Statt eines separaten Monitorrechners 2 könnte die zweite unabhängige Rechnerkomponente auch mit dem Algorithmusrechner 1 als ASIC (Application Specific Integrated Circuit; anwendungsspezifischer Schaltkreis) auf einem gemeinsamen Hardwarebaustein integriert sein.

Der als Teil des auf dem Mikroprozessor 30 ablaufenden Computerprogramms softwaremäßig implementierte BIST 7 wird von dem Algorithmusrechner 1 online in Zeitscheiben parallel zur Ausführung des eigentlichen Steuer- bzw. Regelalgorithmus 3 abgearbeitet. Bei jedem Aufruf des BIST 7 in einer Zeitscheibe wird ein bestimmter Bereich, d. h. werden bestimmte Gatter, des Rechnerkerns 36 auf eine ordnungsgemäße Funktion überprüft. Für einen Durchlauf des BIST 7 muss dieser mehrmals aufgerufen werden. Ein Durchlauf des BIST dauert in etwa mehrere Millisekunden (z.B. 3 ms). Nach einem Durchlauf des BIST wird eine Testabdeckung von etwa 90% bis 95% aller Gatter des Rechnerkerns 36 des Algorithmusrechners 1 erreicht.

Für die verbleibenden 5% bis 10% der Gatter, die von dem BIST nicht umfasst sind, kann durch Simulation nachgewiesen werden, dass der Zustand dieser Gatter keine Auswirkung auf den bestimmungsgemäßen Ablauf eines bestimmten Computerprogramms, insbesondere eines Steuer- bzw. Regelalgorithmus, auf dem Mikroprozessor 30 hat. Zur Sicherung einer ordnungsgemäßen Funktion dieser 5% bis 10% der Gatter muss also nicht - wie beim Stand der Technik - ein Modell 6 des Computerprogramms eingesetzt werden. Mit dem erfindungsgemäßen Verfahren kann eine anwendungsunabhängige Überprüfung der Funktion des Mikroprozessors 30 und gleichzeitig eine vollständige Überprüfung aller relevanten Gatter des Rechnerkerns 36 erzielt werden.

Zur Realisierung des erfindungsgemäßen Verfahrens muss zunächst ermittelt werden, welche Gatter des Rechnerkerns 36 des Algorithmusrechners 1 von dem BIST 7 auf ordnungsgemäße Funktion geprüft werden bzw. welche Gatter von dem BIST 7 nicht erfasst werden. Für die Gatter, die von dem BIST 7 nicht erfasst werden, muss dann für ein bestimmtes Computerprogramm, das auf dem Mikroprozessor 30 abläuft, ermittelt werden, ob der Zustand dieser Gatter Auswirkungen auf den bestimmungsgemäßen Ablauf des Computerprogramms hat.

Beides kann mittels eines Simulationsrechners, einem sog. Silicon Emulator, ermittelt werden. Auf dem Simulationsrechner ist die Gatterstruktur des Rechnerkerns 36 in programmierbaren Gatterschaltungen (FPGA; Field Programmable Gate Arrays) abgebildet. Der Simulationsrechner wird mittels Netzlisten, die vom Hersteller des Rechnerkerns 36 stammen und das Verhalten des Rechnerkerns 36 beschreiben, programmiert. Die Gatterschaltungen befinden sich in einer Emulationsbox, die von einem Rechner, insbesondere von einer Workstation, aus gesteuert und bedient wird. Die Emulationsbox und der Workstation bilden den Simulationsrechner.

Die Wirksamkeit des BIST wird durch ein Verfahren zur Fehlersimulation nachgewiesen. Die Simulation liefert als prozentuale Größe eine Kennzahl für den Grad der Fehlerabdeckung. Bei der Fehlersimulation wird für den Befehlstest das Befehlstestprogramm mit einem fehlerfreien und einem fehlerbehafteten Modell des Rechnerkerns 36 des Algorithmusrechners 1 auf dem Simulationsrecher betrieben. Wenn das Befehlstestprogramm eine Abweichung feststellt, ist ein Fehler erkannt. Die Gesamtheit aller Befehlstestprogramme bildet den BIST 7 des Rechnerkerns 36. Jeder von dem BIST nicht entdeckte Einzelfehler ist im weiteren Ablauf eine Inputvariable einer im nächsten Schritt durchzuführenden Fehleremulation.

Die Fehleremulation wird auf dem Gattermodell des Simulationsrechners ausgeführt, um die Auswirkungen des Zustands eines Gatters auf den bestimmungsgemäßen Ablauf des Computerprogramms zu ermitteln. Auf Grund der Tatsache, dass der Fehleremulator mit der Peripherie des Algorithmusrechners 1 zusammenarbeitet, können die Auswirkungen von durch den BIST nicht entdeckten Fehlern auf das Gesamtsystem bestimmt werden.

Falls im Rahmen der Fehlersimulation und der Fehleremulation ein Gatter des Rechnerkerns 36 des Algorithmusrechners 1 entdeckt wird, das einerseits nicht von dem BIST erfasst wird und das andererseits Auswirkungen auf den bestimmungsgemäßen Ablauf des Computerprogramms hat, kann der BIST entsprechend erweitert oder abgeändert werden, so dass auch dieses Gatter von dem BIST erfasst wird. Der BIST 7 wird also in einem iterativen Prozess so weit erweitert, dass sämtliche kritischen Restfehler erkannt werden und somit die Systemsicherheit gewährleistet ist.

In Figur 3 ist ein Ablaufdiagramm eines erfindungsgemäßen Verfahrens dargestellt. Das Verfahren beginnt in einem Funktionsblock 10. In einem Funktionsblock 11 wird ein Entwurf eines BIST für den Rechnerkern 36 des Algorithmusrechners 1 erstellt. Dieser Entwurf kann unabhängig von einem Computerprogramm (z. B. mit einem Steuer- bzw. Regelalgorithmus) erstellt werden, das später auf dem Mikroprozessor 30 ablaufen soll. Es ist jedoch auch denkbar, dass bei dem Entwurf des BIST das Computerprogramm, das später auf dem Mikroprozessor 30 ablaufen soll, bereits berücksichtigt wird. Die Erstellung des Entwurfs erfolgt in der Regel beim Hersteller des Rechnerkerns 36.

In einem Funktionsblock 12 wird die Fehlersimulation ausgeführt, um die Wirksamkeit des Entwurfs für den Entwurf des BIST zu ermitteln, d. h. um festzustellen, welche Gatter von dem Entwurf nicht überprüft werden. Dann wird in einem Funktionsblock 13 die Fehleremulation ausgeführt. Die Fehlersimulation und die Fehleremulation werden beide in dem Simulationsrechner beim Ersteller des Computerprogramms, das auf dem Mikroprozessor 30 abläuft, ausgeführt. Bei der Fehleremulation wird jeweils für ein Gatter, das von dem Entwurf des BIST während eines Durchlaufs nicht überprüft wird, ermittelt, ob der Zustand des Gatters Auswirkungen auf den bestimmungsgemäßen Ablauf des Computerprogramms auf dem Mikroprozessor 30 hat. Falls ja, wird von einem Abfragblock 14 zu einem Funktionsblock 15 verzweigt, wo die Bezeichnung des aktuellen Gatters in einem Fehlerspeicher abgelegt wird. Falls jedoch der Zustand des aktuell betrachteten Gatters keine Auswirkungen auf den Ablauf des Computerprogramms hat, wird zu einem weiteren Abfrageblock 16 verzweigt, wo überprüft wird, ob alle Gatter, die von dem Entwurf des BIST nicht erfasst werden, überprüft wurden. Falls nein, wird zu einem Funktionsblock 17 verzweigt, wo das nächste Gatter als aktuelles Gatter ausgewählt wird. Zu dem Abfrageblock 16 wird auch von dem Funktionsblock 15 aus verzweigt.

Falls alle Gatter, die von dem Entwurf des BIST nicht erfasst werden, überprüft wurden, wird zu einem Funktionsblock 18 verzweigt, wo der Fehlerspeicher ausgelesen wird. In einem Abfrageblock 19 wird überprüft, ob der Fehlerspeicher leer ist. Falls ja, wird zu einem Funktionsblock 20 verzweigt, wo der aktuelle Entwurf des BIST als fertiger BIST 7 herangezogen wird. In einem Funktionsblock 21 ist das erfindungsgemäße Verfahren dann beendet.

Falls jedoch der Zustand mindestens eines Gatters des Rechnerkerns 36, das von dem Entwurf des BIST während des Durchlaufs nicht überprüft wurde, Auswirkungen auf den bestimmungsgemäßen Ablauf des Computerprogramms auf dem Mikroprozessor 30 hat (Fehlerspeicher nicht leer), wird von dem Abfrageblock 19 zu dem Funktionsblock 11 verzweigt, wo unter Berücksichtigung des Inhalts des Fehlerspeichers noch einmal ein Entwurf eines BIST erstellt wird.

Dieses rekursive Verfahren wird so lange durchlaufen, bis die Bedingung in Abfrageblock 19 (Fehlerspeicher leer?) erfüllt ist. Gemäß der vorliegenden Erfindung wird also in einem rekursiven Verfahren ein für das jeweilige Computerprogramm optimaler BIST ermittelt.

## Patentansprüche

1. Verfahren zum Erstellen eines Selbsttests (7) zum Überprüfen eines Rechnerkerns (36) eines Mikroprozessors (30) oder eines Mikrocontrollers auf ordnungsgemäße Funktion, wobei der Rechnerkern (36) mehrere Gatter mit jeweils mehreren Transistoren umfasst, bei dem während eines bestimmungsgemäßen Ablaufs eines Computerprogramms (3) auf dem Mikroprozessor (30) oder Mikrocontroller ein Selbsttest (7) zyklisch durchlaufen wird und im Rahmen des Selbsttest (7) Gatter des Rechnerkerns (36) auf ordnungsgemäße Funktion überprüft werden, **dadurch gekennzeichnet, dass** zumindest diejenigen Gatter des Rechnerkerns (36), deren Zustand Auswirkungen auf den bestimmungsgemäßen Ablauf des Computerprogramms (3) auf dem Mikroprozessor (30) oder Mikrocontroller hat, während eines Durchlaufs des Selbsttests (7) überprüft werden und wobei der Selbsttest (7) erstellt wird, indem
- ein Entwurf des Selbsttests (7) für den Rechnerkern (36) erstellt wird (11);
- überprüft wird, ob der Zustand derjenigen Gatter des Rechnerkerns (36), die von dem Entwurf des Selbsttest (7) während eines Durchlaufs nicht überprüft werden, Auswirkungen auf den bestimmungsgemäßen Ablauf des Computerprogramms (3) auf dem Mikroprozessor (30) oder Mikrocontroller hat (14);
- falls der Zustand mindestens eines Gatters des Rechnerkerns, das von dem Entwurf des Selbsttests (7) während eines Durchlaufs nicht überprüft wird, Auswirkungen auf den bestimmungs gemäßen Ablauf des Computerprogramms (3) auf dem Mikroprozessor (30) oder Mikrocontroller hat, der fertige Selbsttest (7) erstellt wird, indem der Entwurf des Selbsttests (7) derart erweitert wird, dass zusätzlich zumindest diejenigen Gatter des Rechnerkerns (36) überprüft werden, die von dem Entwurf des Selbsttests (7) nicht überprüft wurden und deren Zustand Auswirkungen auf den bestimmungsgemäßen Ablauf des Computerprogramms (3) auf dem Mikroprozessor (30) oder Mikrocontroller hat; und
- falls der Zustand derjenigen Gatter des Rechnerkerns (36), die von dem Entwurf des Selbsttest (7) während eines Durchlaufs nicht überprüft werden, keine Auswirkungen auf den bestimmungsgemäßen Ablauf des Computerprogramms (3) auf dem Mikroprozessor (30) oder Mikrocontroller hat, der Entwurf des Selbsttests (7) als fertiger Selbsttest (7) herangezogen wird 20).

2. Verfahren nach Anspruch 1, **dadurch gekennzeichnet, dass** vor der Überprüfung (14), ob der Zustand derjenigen Gatter des Rechnerkerns (36), die von dem Entwurf des Selbsttests (7) während eines Durchlaufs nicht überprüft werden, Auswirkungen auf den bestimmungsgemäßen Ablauf des Computerprogramms (3) auf dem Mikroprozessor (30)' oder Mikrocontroller hat, ermittelt wird, welche Gatter des Rechnerkerns (36) von dem Entwurf des Selbsttest (7) während eines Durchlaufs nicht überprüft werden.

3. Verfahren nach Anspruch 2, **dadurch gekennzeichnet, dass** die Ermittlung (11), welche Gatter des Rechnerkerns (36) von dem Entwurf des Selbsttests (7) während eines Durchlaufs nicht überprüft werden, auf einem Emulator ausgeführt wird, auf dem die Gatterstruktur des Rechnerkerns (36) zumindest teilweise abgebildet ist.

4. Verfahren nach einem der Ansprüche 1 bis 3, **dadurch gekennzeichnet, dass** die Überprüfung (14), ob der Zustand derjenigen Gatter des Rechnerkerns (36), die von dem Entwurf des Selbsttests (7) während eines Durchlaufs nicht überprüft werden, Auswirkungen auf den bestimmungsgemäßen Ablauf des Computerprogramms (3) auf dem Mikroprozessor (30) oder Mikrocontroller hat, auf einem Emulator ausgeführt wird, auf dem die Gatterstruktur des Rechnerkerns (36) zumindest teilweise abgebildet ist.

## Claims

1. Method for producing a self-test (7) for checking a computer core (36) in a microprocessor (30) or in a microcontroller for correct operation, where the computer core (36) comprises a plurality of gates with a respective plurality of transistors, in which during correct execution of a computer program (3) on the microprocessor (30) or microcontroller a self-test (7) is performed cyclically and the self-test (7) involves gates in the computer core (36) being checked for correct operation, **characterized in that** at least those gates in the computer core (36) whose state affects the correct execution of the computer program (3) on the microprocessor (30) or microcontroller are checked while the self-test (7) is being performed, and where the self-test (7) is produced by
- producing (11) a design for the self-test (7) for the computer core (36);
- checking (14) whether the state of those gates in the computer core (36) which are not checked by the design of the self-test (7) during a performance affects the correct execution of the computer program (3) on the microprocessor (30) or microcontroller;
- producing the finished self-test (7), if the state of at least one gate in the computer core which is not checked by the design of the self-test (7) during a performance affects the correct execution of the computer program (3) on the microprocessor (30) or microcontroller, by extending the design of the self-test (7) such that a check is additionally performed on at least those gates in the computer core (36) which have not been checked by the design of the self-test (7) and whose state affects the correct execution of the computer program (3) on the microprocessor (30) or microcontroller; and
- using (20) the design of the self-test (7) as a finished self-test (7) if the state of those gates in the computer core (36) which are not checked by the design of the self-test (7) during a performance does not affect the correct execution of the computer program (3) on the microprocessor (30) or microcontroller.

2. Method according to Claim 1, **characterized in that** before the check (14) to determine whether the state of those gates in the computer core (36) which are not checked by the design of the self-test (7) during a performance affects the correct execution of the computer program (3) on the microprocessor (30) or microcontroller it is ascertained which gates in the computer core (36) are not checked by the design of the self-test (7) during a performance.

3. Method according to Claim 2, **characterized in that** the ascertainment (11) of which gates in the computer core (36) are not checked by the design of the self-test (7) during a performance is carried out on an emulator on which the gate structure of the computer core (36) is at least partly mapped.

4. Method according to one of Claims 1. to 3, **characterized in that** the check (14) to determine whether the state of those gates in the computer core (36) which are not checked by the design of the self-test (7) during a performance affects the correct execution of the computer program (3) on the microprocessor (30) or microcontroller is carried out on an emulator on which the gate structure of the computer core (36) is at least partly mapped.

## Revendications

1. Procédé pour élaborer un test automatique (7) du calculateur central (36) d'un microprocesseur ou micro-contrôleur (30),
le calculateur central (36) ayant plusieurs portes composées chacune de plusieurs transistors,
selon lequel on exécute de manière cyclique un test automatique (7) pendant le déroulement normal d'un programme d'ordinateur (3) dans le microprocesseur ou micro-contrôleur (30),
et dans le cadre du test automatique (7) on contrôle le fonctionnement des portes du calculateur central (36),
**caractérisé en ce qu'**
on vérifie au moins les portes du calculateur central (36) dont l'état a un effet sur le déroulement normal du programme (3) dans le microprocesseur ou micro-contrôleur (30), pendant l'exécution du test automatique (7) et
on élabore le test automatique (7),
- en établissant (11) une ébauche de test automatique (7) du calculateur central (36),
- en vérifiant (14) si l'état des portes du calculateur central (36) non vérifiées pendant l'exécution de l'ébauche de test automatique (7) a un effet sur le déroulement normal du programme (3) dans le microprocesseur ou micro-contrôleur (30),
- si au moins une porte du calculateur central non vérifiée par l'exécution de l'ébauche de test automatique (7) a un effet sur le déroulement normal du programme (3) du microprocesseur ou du micro-contrôleur (30), on établit le test automatique (7), définitif en l'étendant pour vérifier en plus, au moins les portes du calculateur central (36) non vérifiées par l'ébauche de test automatique (7) et dont l'état a un effet sur l'exécution normale du programme (3) dans le microprocesseur ou micro-contrôleur (30) et
- si l'état des portes du calculateur central (36) non vérifiées par l'exécution de l'ébauche de test automatique (7) n'a pas d'effet sur le déroulement normal du programme (3) dans le microprocesseur ou micro-contrôleur (30), on utilise directement l'ébauche de test automatique (7) comme test automatique définitif (7).

2. Procédé selon la revendication 1,
**caractérisé en ce qu'**
avant de vérifier (14) si l'état des portes du calculateur central (36) non vérifiées par l'exécution de l'ébauche de test automatique (7) a un effet sur le déroulement normal du programme (3) dans le microprocesseur ou le micro-contrôleur (30), on détermine les portes du calculateur central (36) non vérifiées pendant l'exécution de l'ébauche de test automatique (7).

3. Procédé selon la revendication 2,
**caractérisé en ce qu'**
on détermine (11) les portes du calculateur central (36) non vérifiées pendant l'exécution de l'ébauche de test automatique (7) avec un émulateur dans lequel la structure des portes du calculateur central (36) a au moins été partiellement copiée.

4. Procédé selon l'une des revendications 1 à 3,
**caractérisé en ce qu'**
on vérifie (14) si l'état des portes du calculateur central (36) non vérifiées par l'exécution de l'ébauche de test automatique (7) a un effet sur le déroulement normal du programme (3) dans le microprocesseur ou micro-contrôleur (30) avec un émulateur dans lequel a été copiée au moins en partie la structure des portes du calculateur central (36).
